# EUROPÄISCHE PATENTSCHRIFT

(11) **EP 1 270 378 B1**
(45) Veröffentlichungstag und Bekanntmachung des Hinweises auf die Patenterteilung: **11.01.2006**
(21) Anmeldenummer: 02014222.0
(22) Anmeldetag: 26.06.2002
(51) Int. Cl.: B62D 21/20, F16B 5/02, B62D 63/06

(54) **Fahrgestell für Fahrzeuganhänger**
Chassis for automotive trailer
Chassis pour remorque de véhicule

(30) Priorität: 26.06.2001 DE 20110408 U
(43) Veröffentlichungstag der Anmeldung: 02.01.2003
(73) Patentinhaber: AL-KO KOBER AG, D-89359 Kötz (DE)
(72) Erfinder: Böller Josef, 86476 Neuburg (DE); Weh Johann, 89365 Röfingen (DE)
(74) Vertreter: Ernicke, Hans-Dieter

(56) Entgegenhaltungen:
- EP-A- 0 479 115
- DE-A- 3 102 683
- DE-U- 9 419 710
- DE-U- 29 723 280
- DE-U- 29 922 270

## Beschreibung

Die Erfindung betrifft ein Fahrgestell für Fahrzeuganhänger mit den Merkmalen im Oberbegriff des Hauptanspruches. Ein solches Fahrgestell ist aus der DE 94 19 710.5 bekannt.

Ein weiteres solches Fahrgestell ist aus der DE 31 02 683 A1 bekannt. Es besteht aus mehreren untereinander mit Überlappung verbundenen Fahrgestellteilen in Form einer starren V-Deichsel, einem aus zwei parallelen Längsholmen aufgebauten Mittelteil sowie front- und heckseitigen Querträgern. An den Verbindungsstellen sind formschlüssig ineinander greifende Profilierungen mit einer oder mit mehreren Schraubverbindungen vorhanden. Die in den Holmstegen angebrachten Profilierungen bestehen aus napfförmigen Ausprägungen, die einen kegelförmigen Mantel haben und konzentrisch zur Durchgangsbohrung angeordnet sind.

Die DE 299 22 270 U1 zeigt ein ähnliches Fahrgestell mit formschlüssig ineinander greifenden Profilierungen und napfförmigen Ausprägungen, wobei an den Befestigungsstellen mehrere dieser Profilierungen in einer entlang der Fahrgestelllängsachse ausgerichteten Reihe angeordnet sind.

Das DE-G 77 01 586 lehrt die Verbindung von Deichselholmen, Achsträgern und Längsholmen eines Fahrgestells mittels jeweils vier einzelner napfförmiger Profilierungen mit Schraubverbindungen, wobei die Profilierungen wie im eingangs genannten Stand der Technik eine kreisrunde Kontur und eine zentrische Durchgangsbohrung aufweisen.

Ferner ist es aus der EP 0 479 134 bekannt, an Verbindungsstellen von Fahrgestellholmen mit Beschlagteilen, insbesondere Flanschplatten für Fahrzeugaufbauten, Profilierungen mit einer länglichen und insbesondere ovalen Form vorzusehen. Bei diesen Profilierungen ist nur eine Durchgangsbohrung vorhanden, die außermittig angeordnet ist. Die ovalen Profilierungen sollen außerdem eine bestimmte und einseitig zur neutralen Achse ausgerichtete Lage an den Holmstegen haben.

Die DE-U-295 18 575 zeigt ein Fahrgestell für Fahrzeuganhänger, bei dem die beiden Holme einer starren V-Deichsel einstückig in Längsholme übergehen und mit dem Anhängeraufbau verbunden werden. Die Deichsel- bzw. die Längsholme haben hierfür mehrere Längsschlitze, durch welche ein bügelförmiger Beschlag gesteckt und mit seinen abgewinkelten Flanschen am Anhängeraufbau angeschraubt werden kann.

Die DE-U-75 34 323 offenbart ein Anhängerfahrgestell, bei dem die Deichselholme mit vorderen Längsholmen verbunden werden. Letztere werden an der Rückseite mit Achsträgerschilden verbunden, an die wiederum rückseitig hintere Längsholme angeschlossen werden. An den Verbindungsstellen besteht ein gegenseitiger Formschluss nur im Bereich der Schraubendurchgangslöcher, wobei die Längsholme an den Schrauböffnungen abgebogene Krägen haben, die in entsprechend vergrößerte kreisrunde Öffnungen der Achsträgerschilde greifen. Eine Längenverstellmöglichkeit ist hierbei nicht gegeben.

Aus der EP 0 479 115 A2 ist ein Fahrgestell mit napfförmigen Profilierungen bekannt, an denen eine Topfschiene zur Verstärkung angeordnet ist.

Die DE 297 23 280 U1 zeigt ein Fahrgestell mit einer längenverstellbaren Anordnung der Deichsel und der Heckverlängerung, wobei ein Verstellraster aus mehreren fluchtend in einer längs gerichteten Reihe liegenden Bohrungen vorhanden ist.

Es ist Aufgabe der vorliegenden Erfindung, ein Fahrgestell mit einer besseren Verbindungstechnik aufzuzeigen.

Die Erfindung löst diese Aufgabe mit den Merkmalen im Hauptanspruch.
Die länglichen Profilierungen mit den länglichen Sicken und den distanzierten mehrfachen Durchgangsverbindungen, insbesondere Schraubverbindungen, haben den Vorteil, dass sie eine bessere und tragfähigere Verbindung als die vorbekannten Konstruktionen bieten. Die länglichen Profilierungen haben über ihre länglicher Sicke zudem eine Ausrichtfunktion für die Verbindung der Fahrgestellteile und können die Belastungen, insbesondere die Biegemomente, besser aufnehmen und übertragen.

Die länglichen Profilierungen mit den mehrfachen Durchgangsverbindungen eignen sich vor allem für die Verbindung tragender Fahrgestellteile, wie Deichsel, Längsholme und Achsträger sowie ggf. auch Heckverlängerungen. Das aus den verschiedenen Teilen aufgebaute Fahrgestell erhält durch diese Verbindungstechnik eine höhere Steifigkeit und Festigkeit. Insbesondere die Achse und die Längsholme lassen sich hierdurch optimal mit den anderen Fahrgestellteilen verbinden. Diese erhöhte Steifigkeit des Fahrgestells ist vor allem für verformungs- und verwindungsempfindliche Aufbauten, wie z.B. Wohnwagenaufbauten mit Türen, Fenstern und dgl. Öffnungen wichtig. Die erhöhte Fahrgestellsteifigkeit erlaubt es außerdem, den Fahrzeugaufbau leichter, filigraner und dünnwandiger auszubilden.

Weitere Vorteile liegen in der einfachen Austauschmöglichkeit für die Achse im Servicefall. Zudem können unterschiedliche Materialien für die verschiedenen Fahrgestellteile verwendet werden. Ferner sind unterschiedliche Blechstärken für die verschiedenen Fahrgestellteile möglich.

Für eine hohe Stabilität des Fahrgestells ist es nützlich, wenn die Profilierungen quer zur Fahrgestelllängsachse ausgerichtet sind. Hierzu ist es ferner vorteilhaft, wenn die Profilierungen gerade und parallelkantige Sicken aufweisen und sich über den Großteil der Steghöhe erstrecken. Dementsprechend groß ist die Abstützung und Tragkraft der formschlüssig ineinander greifenden Profilierungen.

Mit den länglichen und in ihrer Erscheinungsform schienenförmigen Profilierungen bzw. Sicken kann auch eine Längenverstellung der Fahrgestellteile, z.B. eine Längenverstellung zwischen Deichsel und Längsholm oder Achsträger, erreicht werden. Die gleiche Längenverstellung kann zusätzlich auch zwischen Achsträger und hinteren Längsholmen geschaffen werden. Auch eine Heckverlängerung lässt sich in ähnlicher Weise realisieren. Das Fahrgestell und die Gestaltung seiner Teile können hierbei beliebig gewählt werden, wobei die Achse auch in ein aus Längsholmen bestehendes Mittelteil integriert und an den Längsholmen in entsprechenden Aussparungen mittels Achsschilden direkt befestigt sein kann. In diesem Fall werden die Längsholme direkt mit der Deichsel über die Profilierungen und ggf. eine Längenverstellung verbunden.

Die länglichen Profilierungen haben hierbei auch Vorteile für die Feinheit der Verstellmöglichkeiten, das Rastermaß und die Sicherungsmöglichkeiten. Die länglichen Profilierungen können schlanker als die bekannten kegelstumpfförmigen Profilierungen sein. Das Rastermaß kann hierdurch feiner sein. Außerdem ist seitlich neben den länglichen Profilierungen mehr Platz für zusätzliche Schraubsicherungen oder für die Befestigung von Anbauteilen, z.B. Stoßdämpfern etc..

Die Profilierungen haben ferner den Vorteil, dass sie sich mit sehr geringen Toleranzen fertigen lassen. Die Passgenauigkeit der Profilierungen an der Verbindungsstelle und ihr formschlüssiges ineinander greifen sind dadurch besonders gut. Dies kommt auch dem vorerwähnten Ausrichteffekt und der Momentenaufnahme zugute. Die Profilierungen können zumindest an der Verbindungsstelle mit ein oder mehreren Topfschienen verstärkt werden, welche die Formgebung der Profilierungen stabilisieren und zusätzlich Kräfte aufnehmen. Durch diese örtliche Verstärkung können die Bleche der Fahrgestellteile noch weiter verdünnt werden.

Für die Ausgestaltung der länglichen Profilierungen und ihrer Sickenbereiche gibt es unterschiedliche Gestaltungsmöglichkeiten. Die Sickenbereiche können eine einheitliche zusammenhängende Wannenform haben, was eine sehr gute Stabilisierung und Abstützung mit sich bringt. Alternativ können die Profilierungen auch eine unterbrochene Sickenform besitzen, die aus mindestens einer länglichen Sicke und mindestens einer zugeordneten napf- oder kegelstumpfförmigen Sicke besteht. Bei dieser Variante ist es ferner möglich, bei den ineinander greifenden länglichen Sicken die hintere oder unten liegende Sicke an der Verbindungsstelle an einem Ende mit einer Sickenöffnung mit einem schrägen Übergang zu versehen. Diese Sicke ist außerdem länger als die eingreifende andere längliche Sicke. Diese Gestaltung hat den Vorteil, dass sie leichter und toleranzärmer hergestellt werden kann. An einer solchen Verbindungsstelle lassen sich die mit ihren Profilierungen ineinander greifenden Fahrgestellteile leichter montieren und demontieren.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1 und 2:: ein aus mehreren Teilen bestehendes Anhängerfahrgestell mit formschlüssig ineinander greifenden schienenförmigen Profilierung in Seitenansicht und geklappter Draufsicht,
- Figur 3:: eine vergrößerte Detailansicht einer Verbindungsstelle mit den Profilierungen in Seitenansicht,
- Figur 4:: einen Schnitt durch Profilierungen gemäß Schnittlinie IV-IV von Figur 3,
- Figur 5:: eine Seitenansicht einer Achse mit Achsschilden,
- Figur 6:: einen Schnitt durch die Achse von Figur 5 gemäß Schnittlinie VI-VI,
- Figur 7:: eine Draufsicht auf die Achse von Figur 5,
- Figur 8:: eine vergrößerte Seitenansicht eines Achsschildes,
- Figur 9:: einen Schnitt durch den Achsschild von Figur 8 entsprechend Schnittlinie IX-IX,
- Figur 10:: eine geklappte Draufsicht auf den Achsschild von Figur 8,
- Figur 11:: eine Seitenansicht eines Deichselholms mit Profilierungen,
- Figur 12:: einen Längsschnitt durch eine Profilierung gemäß Schnittlinie XII-XII von Figur 11,
- Figur 13:: einen Querschnitt durch zwei benachbarte Profilierungen gemäß Schnittlinie XIII-XIII von Figur 11,
- Figur 14:: eine Seitenansicht eines Längsholms,
- Figur 15:: einen Querschnitt durch eine Profilierung gemäß Schnittlinie XV-XV von Figur 14,
- Figur 16:: eine Draufsicht auf eine abgewandeltes Anhängerfahrgestell,
- Figur 17:: eine vergrößerte Seitenansicht einer Variante der Verbindungsstelle mit den Profilierungen und
- Figur 18:: einen Querschnitt durch die Verbindungsstelle gemäß Schnittlinie XVIII-XVIII von Figur 17.

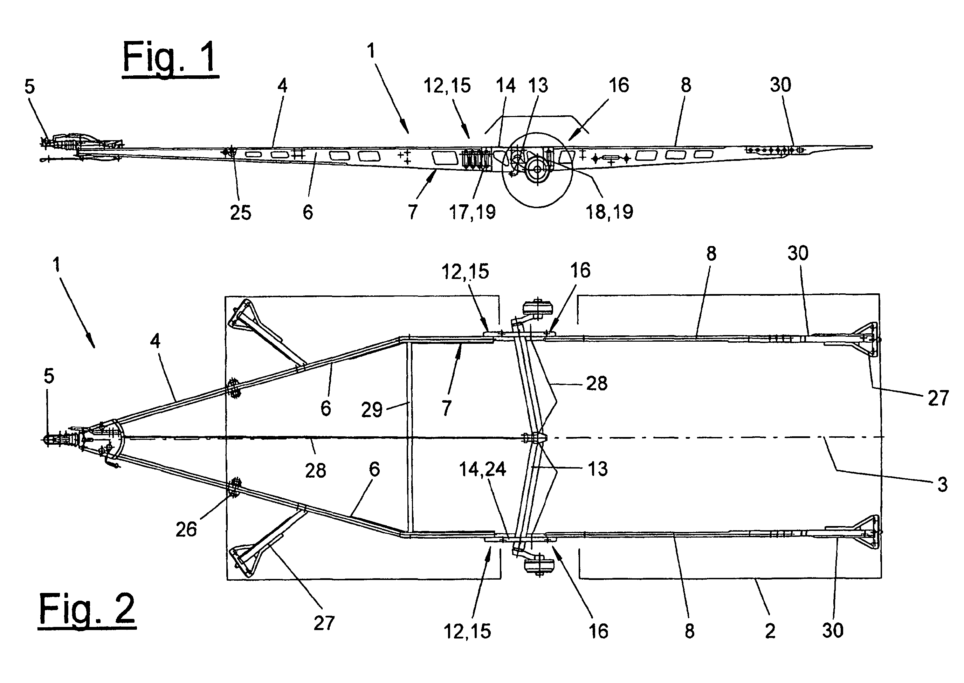

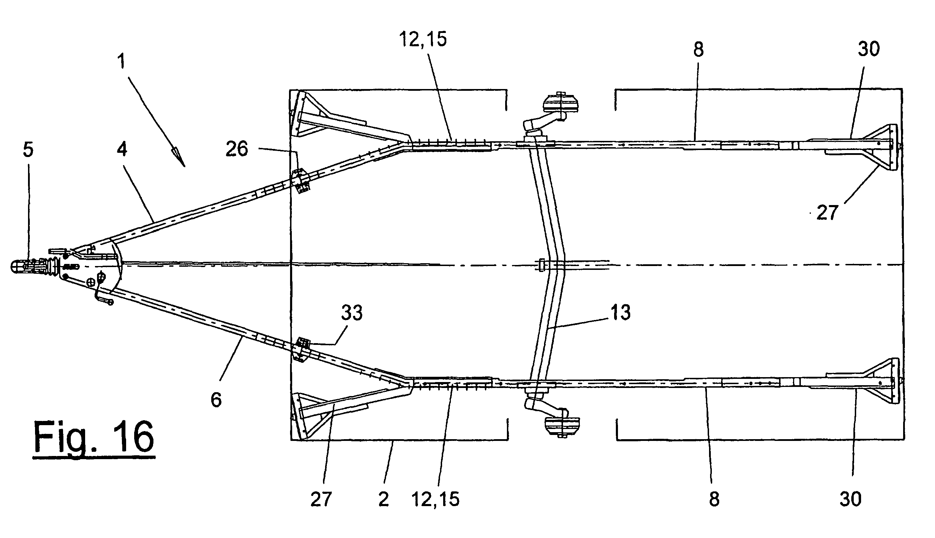

Figur 1 und 2 zeigen in Seitenansicht und geklappter Draufsicht ein Fahrgestell (1) für Fahrzeuganhänger. Figur 16 zeigt hierzu eine abgewandelte Ausführungsform. Das Fahrgestell (1) besteht jeweils aus mehreren miteinander für nachstehend näher beschriebene Profilierungen (17,18,19) verbundene Fahrgestellteile (4,8,14). In der gezeigten Form hat das Fahrgestell (1) eine einzelne Achse (13). In einer abgewandelten Ausführungsform kann auch eine Tandemachse vorhanden sein. Das Fahrgestell (1) besitzt eine starre V-förmige Deichsel (4), die aus zwei Deichselholmen (6) besteht. Die Deichsel (4) trägt am vorderen Ende eine Anhängerkupplung (5) beliebiger Bauart. Hier kann auch eine Handbremseinrichtung und eine Auflaufeinrichtung angebaut sein, welche über einen Bremszug (28) mit der Achse (13) und den Radbremsen verbunden sind. An der Deichsel (4) können auch noch andere Komponenten, z.B. ein Stützrad, eine Abreiß-Sicherung, eine Ankuppelhilfe, eine Deichselhaube und dergleichen angeordnet sein.

Die Deichselholme (6) haben abgekröpfte Endbereiche (7), die im Wesentlichen parallel ausgerichtet sind und an der Kröpfstelle über eine Quertraverse (29) stabilisiert sind. An den Deichselholmen (6) können ein oder mehrere Beschläge (26) für einen Fahrzeugaufbau (2) angeordnet sein. Zudem lassen sich an den Deichselholmen (6) ausdrehbare Stützen (27) für den Anhänger befestigen.

Die Achse (13) ist in der gezeigten Ausführungsform von Figur 1 bis 15 mit einem Achsträger (14) versehen, welcher zwei außenseitige Achsträgerschilde (24) aufweist. Die Deichselholme (6) sind mit dem vorderen Ende der Achsträgerschilde (24) an einer ersten oder vorderen Verbindungsstelle (15) verbunden. Das hintere Ende der Achsträgerschilde (24) ist mit jeweils einem anschließenden Längsholm (8) über eine zweite hintere Verbindungsstelle (16) verbunden. An den Längsholmen (8) können rückseitig noch vorzugsweise verstellbare Heckverlängerungen (30) mit weiteren Stützen (27) anschließen.

In der Variante von Figur 16 ist die Achse (13) mit den Längsholmen (8) auf direktem Wege oder mittels eines Achsträgerschilds starr verbunden. Die Deichselholme (6) sind mit dem vorderen Ende der Längsholme (8) an einer Verbindungsstelle (15) verbunden. An den Längsholmen (8) können rückseitig ebenfalls verstellbare Heckverlängerungen (30) mit weiteren Stützen (27) anschließen.

Die Deichselholme (6) und die Längsholme (8) haben im Durchschnitt eine C-Form. Sie bestehen jeweils aus einem aufrechten oder hochstehenden Steg (9) und hieran endseitig anschließenden quer abstehenden Ober- und Untergurten (10,11). Bei der Variante von Figur 16 können der Ober- und Untergurt (10,11) der Deichselholme (6) oder der Längsträger (8) an der Verbindungsstelle (15) eine Ausklinkung aufweisen. Die Holme (6,8) bestehen vorzugsweise aus Metall, insbesondere verzinkten Stahlblechen. Sie können zur Gewichtseinsparung ein oder mehrere Ausnehmungen aufweisen. Die Holme (6,8) sind vorzugsweise dünnwandiger ausgebildet als die Achsträgerschilde (24).

Die ebenfalls aus verzinktem Stahlblech bestehenden Achsträgerschilde (24) haben im Querschnitt eine Z-artige Formgebung mit einem aufrechten Steg (9), einem Obergurt (10) und einem Untergurt (11). Die Obergurte (10) der Holme (6,8) und der Achsträgerschilde (24) liegen vorzugsweise auf gleicher Höhe und dienen als Auflage für den Boden des Fahrzeugaufbaus (2), welcher mit den Obergurten (10) direkt oder über die vorerwähnten Beschläge (26) fest verbunden werden kann. Die Untergurte (11) der Achsträgerschilde (24) untergreifen die Untergurte (11) der Holme (6,8).

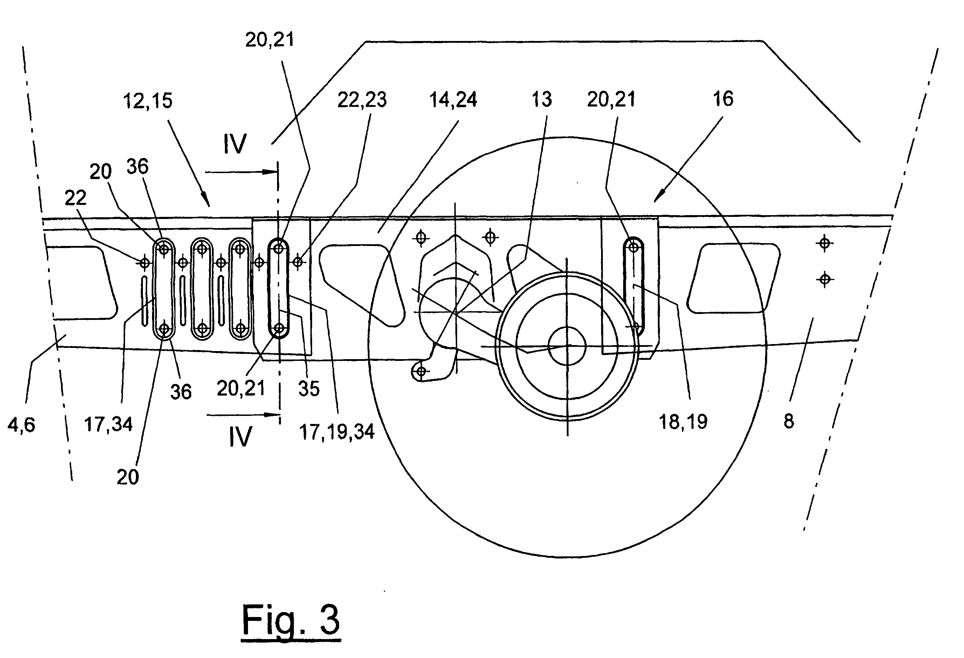

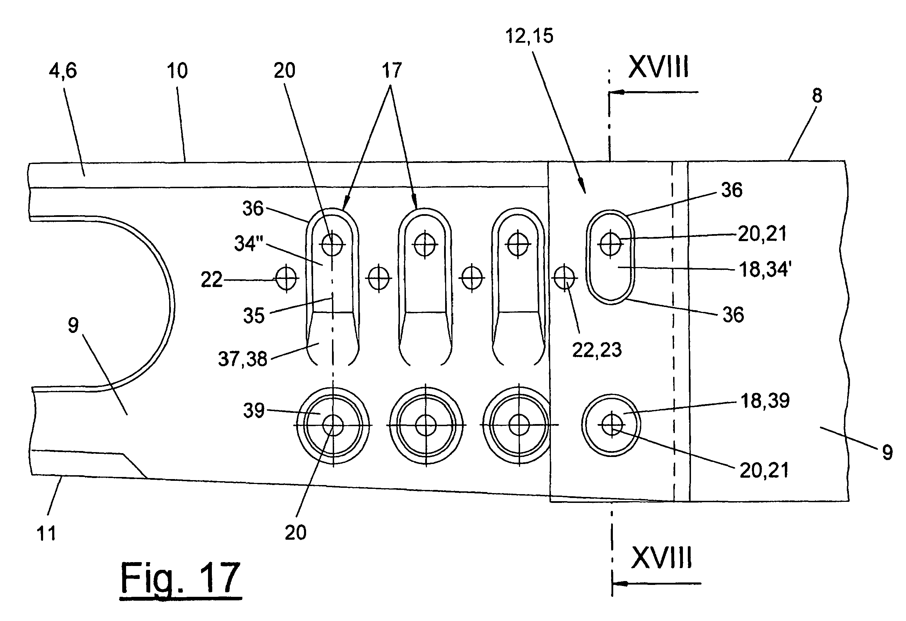

Die Verbindung der Fahrgestellteile (4,8,14) erfolgt über längliche Profilierungen (17,18,19), die ein- oder mehrteilige Sickenbereiche haben. Sie besitzen in den verschiedenen Ausführungsformen mindestens eine längliche und schienenförmige Sicke (34,34',34'') sowie gegebenenfalls ein oder mehrere zusätzliche napfförmige oder kegelstumpfförmige Sicken (39), die formschlüssig ineinander greifen und mit zwei endseitig und mit Distanz zueinander angeordneten Durchgangsöffnungen (20) für eine Durchgangsverbindung (21) versehen sind. Die Durchgangsverbindung (21) ist vorzugsweise als lösbare Schraubverbindung ausgeführt, kann alternativ aber auch eine andere Art von Verbindung, z.B. eine Nietverbindung sein. Figur 3, 4, 17 und 18 zeigen diese Anordnung im Detail.

Die länglichen Sicken (34,34',34'') haben vorzugsweise gerade und parallele Längskanten oder -ränder und an ein oder beiden Enden vorzugsweise kreisbogenförmige Sickenabschlüsse (36) sowie einen zumindest weitgehend geschlossenen abgesenkten Boden. Die Durchgangsöffnungen (20) sind vorzugsweise mittig an den Sickenabschlüssen (36) angeordnet. Die Längskanten und die Sickenabschlüsse (36) haben im Querschnitt eine Stufenform.

In der Bauform von Figur 1 bis 15 besitzen die länglichen Sicken (34) an beiden Enden den genannten stufenförmigen Sickenabschluss (36). Die Sicken (34) haben dabei eine gleichmäßige und an beiden Stirnenden geschlossene vertiefte Wannenform. In der länglichen Sicke (34) sind dabei zwei Durchgangsöffnungen (20) an den Sickenabschlüssen (36) vorhanden.

In der Variante von Figur 16 bis 18 hat die längliche Sicke (34'') der unten oder hinten liegenden Profilierung (17) nur an einem Ende, vorzugsweise dem außen zum Obergurt (10) liegenden Ende, den besagten stufenförmigen Sickenabschluss (36) mit der Durchgangsöffnung (20). Am anderen gegenüber liegenden Ende ist eine Sickenöffnung (37) mit einem schrägen Übergang (38) vorhanden, welcher eine flachere Steigung als die vorgenannte Stufenform aufweist und einen vom vertieften Boden aus sanft ansteigenden Auslauf oder eine Gleitrampe bildet.

Die hierbei oben oder vorn liegende Profilierung (18) besitzt hingegen eine anders geformte längliche Sicke (34'). Diese ist ähnlich wie bei der ersten Bauform gestaltet und hat eine gleichmäßige und an beiden Stirnenden geschlossene vertiefte Wannenform. Sie ist außerdem kürzer als die untere oder hintere Sicke (34'') und reicht von deren Sickenabschluss (36) bis etwa zum Beginn des schrägen Übergangs (38). Die längliche Sicke (34') hat nur eine Durchgangsöffnung (20) am außen liegenden Sickenabschluss (36).

Bei der Variante von Figur 16 bis 18 ist den länglichen Sicken (34',34'') außerdem noch die vorerwähnte napf- oder kegelstumpfförmige Sicke (39) zugeordnet. Sie ist dabei vorzugsweise zur Sickenöffnung (37) in der axialen Verlängerung benachbart angeordnet und befindet sich unterhalb von dieser. Die in der Draufsicht vorzugsweise kreisrunde Sicke (39) hat im Querschnitt eine vorzugsweise umlaufende Stufenform und im Zentrum eine Durchgangsöffnung (20).

Bei den Profilierungen (17,18,19) der Bauform von Figur 1 bis 15 ist ein in der Form einheitlicher, zusammenhängender Sickenbereich vorhanden. In der Variante von Figur 16 bis 18 haben die Profilierungen (17,18,19) einen geteilten Sickenbereich. Im gezeigten Ausführungsbeispiel sind die Sicken (34,34',34'',39) hierbei räumlich getrennt und mit Abstand angeordnet.

In einer nicht dargestellten Variante können die Sicken (34'',39) ohne Abstand angeordnet sein, wobei sie durch den schrägen Übergang (38) ineinander übergehen. In einer weiteren Abwandlung können auch die länglichen Sicken (34) von Figur 1 bis 15 zusätzliche napfförmige Sicken (39) aufweisen. Zudem können in den verschiedenen Bauformen den länglichen Sicken (34,34',34'') jeweils statt einer einzelnen mehrere napfförmige Sicken (39) zugeordnet sein.

Die Sicken (34,34',34'',39) sind in den Stegen (9) angeordnet und durch Prägen des Stegmaterials ausgeformt. Die Prägung erfolgt vorzugsweise von der Stegaußenseite.

Die Profilierungen (17,18,19) bzw. die länglichen Sicken (34,34',34'') sind mit ihrer Längserstreckung oder Sickenachse (35) quer zur Längsachse (3) des Fahrgestells (1) ausgerichtet.

Die Profilierungen (17,18,19) reichen über einen Großteil der Steghöhe, wobei sie knapp vor den Ober- und Untergurten (10,11) enden. Sie sind vorzugsweise zur Steghöhe in etwa mittensymmetrisch angeordnet und erstrecken sich quer über den neutralen Biegebelastungsbereich nach oben und unten.

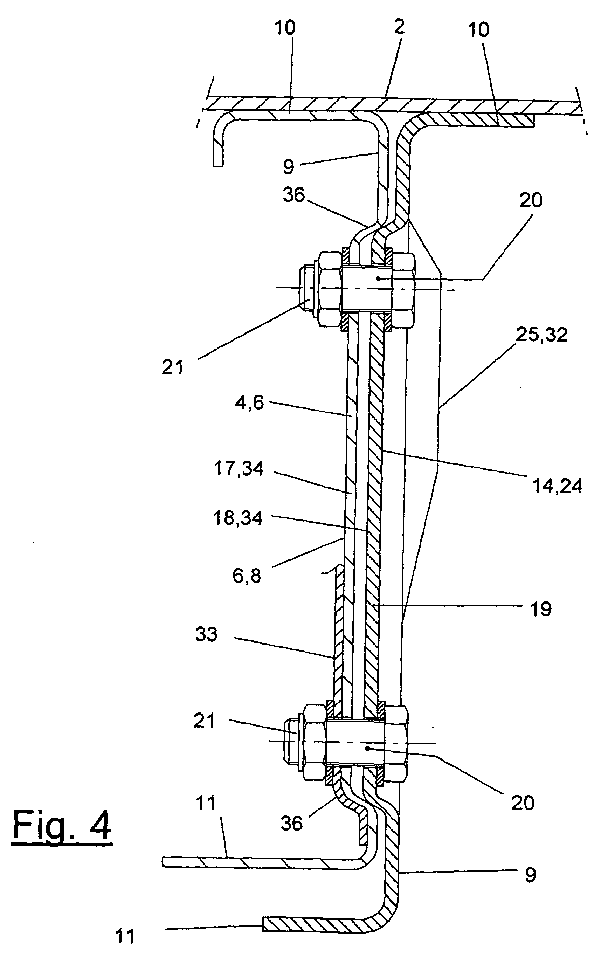

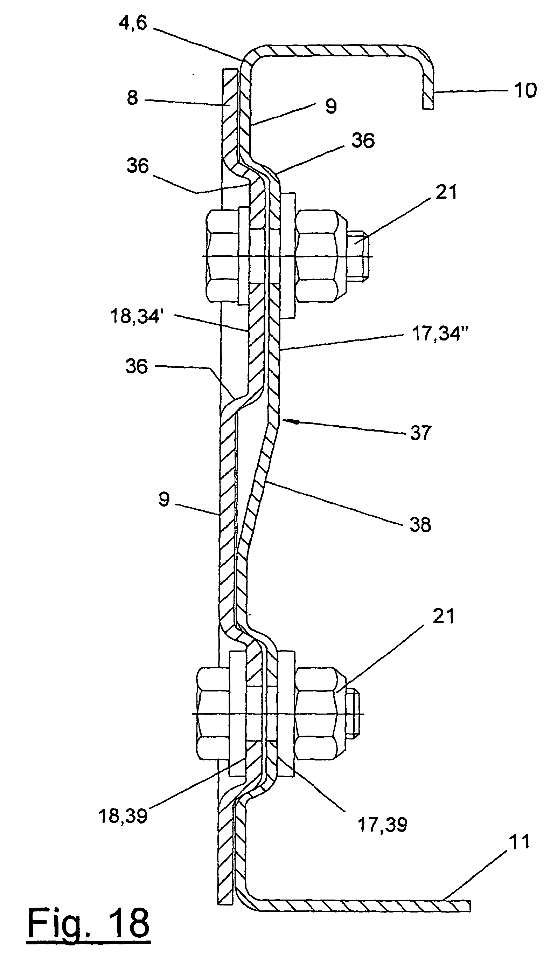

Die Profilierungen (17,18,19) und ihre Sicken (34,34',34'',39) haben mit Ausnahme der Sickenöffnung (37) durch den Prägevorgang stufenartige oder relativ steil schräg abfallende und trichterförmig sich verjüngende Seitenwände, mit denen Sie bei der Montage formschlüssig ineinander greifen. Die Seitenwände der jeweils ineinander greifenden Profilierungen (17,18,19) stützen sich dabei über die diese Profilierungskontur umlaufend aneinander ab und werden durch die Schraubverbindung(en) (21) zusammengehalten und gespannt. Am Boden kann hierbei zwischen den zusammengesteckten Profilierungen (17,18,19) ein Abstand bestehen, der in Figur 4 und 18 der Übersichtlichkeit wegen vergrößert dargestellt ist.

Die Profilierungen (17,18,19) bzw. länglichen Sicken (34) von Figur 1 bis 15 können allesamt gleich ausgeformt sein, wobei die Durchgangsöffnungen oder Schrauböffnungen (20) derart bemessen und angeordnet sind, dass sie in Montagestellung miteinander fluchten. Alternativ kann die außen liegende Profilierung auch etwas kleiner als die Gegenprofilierung sein, in welche sie eingreift und sich dadurch unter Bildung größerer Kontakt- und Tragflächen genauer einschmiegen.

Bei der Variante von Figur 16 bis 18 sind die hinten oder unten liegenden länglichen Sicken (34'') und napfförmigen Sicken (39) größer und insbesondere breiter als die vorn oder oben liegenden Sicken (34'',39), so dass auch hier mit Ausnahme der Sickenöffnung (37) der vorerwähnte Formschluss besteht.

In der gezeigten Ausführungsform von Figur 1 bis 15 werden die Achsträgerschilde (24) an den Verbindungsstellen (15,16) außenseitig an den Deichselholmen (6) und Längsholmen (8) mit Überlappung sowie flächigem Berührungskontakt angelegt und über die besagten Profilierungen (17,18,19) verbunden und befestigt. Die außenseitigen Profilierungen (19) der Achsträgerschilde (24) greifen dabei formschlüssig in die Profilierungen (17) der Deichselholme (6) bzw. die Profilierungen (18) der Längsholme (8) ein.

In der Variante von Figur 16 bis 18 werden die Längsholme (8) außenseitig an den Deichselholmen (6) mit Überlappung sowie flächigem Berührungskontakt angelegt und über die besagten Profilierungen (17,18) verbunden und befestigt. Diese Anordnung kann auch umgedreht sein.

Die Verbindungsstellen (15, 16) gemäß Figur 16 bis 18 mit den länglichen Sicken (34'') und der Sickenöffnung (37) ermöglichen einen Ausbau des Achsträgers (14) bzw. des Längsholms (8) ohne Demontage vom Aufbau. Das verbleibende Fahrgestellteil, z. B. die Deichsel (6) ist an der Oberseite mit dem Anhängeraufbau starr verbunden, z. B. verklebt, und ist dadurch im oberen Stegbereich sehr steif. Im unteren Bereich ist der Steg (9) durch die größere Entfernung vom Fahrzeugaufbau (2) weicher. Hier können nach dem Lösen der Schraubverbindung (21) die napfförmigen ineinander greifenden Sicken (39) zum Lösen auseinander gedrückt werden, was im oberen steifen Stegbereich nicht ohne weiteres möglich ist. Dank der Sickenöffnung (37) und dem schrägen Übergang (38) kann dann der Achsträgerschild (14) bzw. der Längsholm (8) nach unten weggezogen und ausgebaut werden. Bei dieser Profilierungsgestaltung von Figur 16 bis 18 bildet der obere längliche Sickenbereich (34', 34'') die Querführung, während der napfförmige Sickenbereich (39) eine Schnappverbindung und Verriegelung bieten kann.

Wie Figur 4 im unteren Teil in einer abgebrochenen Darstellung verdeutlicht, können zur Verstärkung der Verbindung und zur Stabilisierung von ein oder mehreren Profilierungen (17,18) und der angrenzenden Stegbereiche Topfschienen (33) vorhanden sein. Zur Erzielung maximaler Gewichtseinsparungen des Fahrgestells (1) werden vor allem die Deichsel- und Längsholme (6,8) vorzugsweise relativ dünnwandig ausgeführt. Deren Profilierungen (17,18) können durch die Topfschienen (33) verstärkt werden.

Die Topfschienen (33) haben eine an die jeweils zugehörigen Profilierungen (17,18) angepasste Formgebung und liegen auf diesen Profilierungen (17,18) vorzugsweise dicht an. Randseitig haben sie einen vorzugsweise umlaufenden Flansch der plan auf den angrenzenden ebenen Stegbereichen aufliegt. Die Topfschienen (33) können eine größere Wanddicke als die Profilierungen (17,18) besitzen. Die einzelne Topfschiene (33) umfasst die zugehörigen Profilierung (17,18) außenseitig wie ein verstärkender Hut und hält sie bei Auftreten von Belastungen in Form. Alternativ können auch mehrere Topfschienen (33) untereinander zu einem gemeinsamen Bauteil verbunden sein und mehrere nebeneinander liegende Profilierungen (17,18), z.B. bei der Längenverstellung (12), bedecken und verstärken. Die Topfschienen (33) können auch bei den anders geformten Sicken (34',34'',39) von Figur 16 bis 18 bei entsprechender Formanpassung eingesetzt werden.

Die Topfschienen (33) haben hierbei eine ähnliche Funktion wie die aus der EP 0 479 133 bekannten kreisrunden Topfscheiben. Die Topfschienen (33) können fest mit den zugehörigen Profilierungen (17,18,19) verbunden sein, indem sie z.B. die beim vorerwähnten Stand der Technik durch Buckelschweißen oder dergleichen andere Befestigungstechniken verbunden sind. Alternativ können die Topfschienen (33) aber auch lose Teile darstellen, die durch die Spannwirkung der Schraubverbindungen (21) in Position gehalten werden. Für die Schraubverbindungen (21) haben die Topfscheiben (33) entsprechende Durchgangsbohrungen, welche mit den Öffnungen (20) in den Profilierungen (17,18) fluchten.

In der in Figur 4 gezeigten bevorzugten Ausführungsform sind die Topfscheiben (33) außenseitig auf den Profilierungen (17,18) der Holme (6,8) angeordnet. Alternativ können sie sich auch an der Innenseite der Profilierungen (17,18) befinden, wobei diese ggf. entsprechend größer ausgebildet sind. In weiterer Abwandlung können Topfscheiben (33) zusätzlich oder alternativ auch an den Profilierungen (19) der Achsträgerschilde (24) lose oder starr angeordnet sein.

Wie Figur 1, 3, 16 und 17 verdeutlichen, kann das Fahrgestell (1) eine Längenverstellung (12) aufweisen, wobei z.B. die Deichselholme (6) gegenüber den Achsträgerschilden (24) oder den Längsholmen (8) in verschiedenen Längspositionen bzw. Auszugslängen angeordnet werden. Hierfür sind an der vorderen Verbindungsstelle (15) mehrere Profilierungen (17) am Deichselholm (6) parallel und auch gleicher Höhe in Richtung der Längsachse (3) hintereinander angeordnet. Der Achsträgerschild (24) bzw. der Längsträger (8) bei Figur 16 bis 18 hat hierbei nur eine Profilierung (18,19), welche je nach Wunschlänge des Fahrgestells (1) in eine der hier dargestellten vier Profilierungen (17) an den Deichselholmen (6) gesteckt und über die Schraubverbindung (21) montiert werden kann.

In Abwandlung der gezeigten Ausführungsform kann diese Längenverstellung (12) mit der mehrfachen Anordnung von Profilierungen auch am Achsträgerschild (24) bzw. dem Längsträger (8) bei Figur 16 bis 18 angeordnet sein. In einer weiteren Variante kann eine zweite Längenverstellung alternativ oder zusätzlich an der hinteren Verbindungsstelle (16) vorhanden sein. In der gezeigten Ausführungsform von Figur 1 bis 15 sind hier die Längsholme (8) und die Achsträgerschilde (24) durch jeweils einzelne ineinander greifende Profilierungen (18,19) miteinander verbunden.

Die vorbeschriebene Längenverstellung (12) mit länglichen Profilierungen (18) kann auch an der hinteren Verbindungsstelle zwischen den Längsholmen (8) und der Heckverlängerung (30) vorhanden sein.

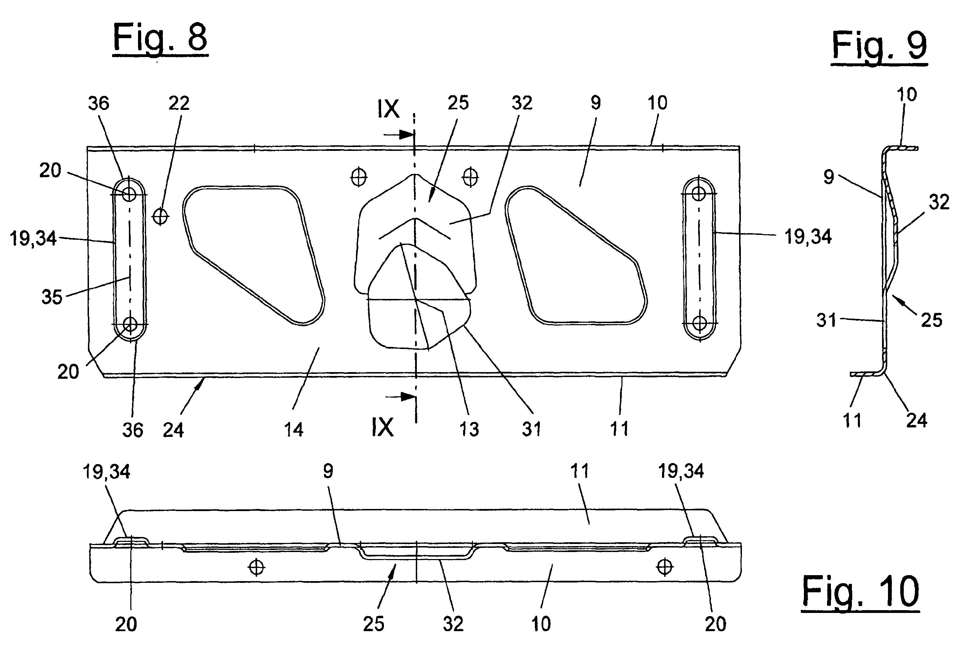

Zur weiteren Sicherung und Stabilisierung der Verbindungen können zusätzliche Durchgangsöffnungen (22) und Durchgangsverbindungen (23), vorzugsweise Schraubverbindungen vorhanden sein. Wie Figur 3 und 8 verdeutlichen, können hierfür z.B. neben jeder Profilierung (17) der Deichselholme (6) jeweils ein oder zwei solcher Schrauböffnungen (22) in Form von einfachen Bohrungen oder Durchbrüchen vorhanden sein. Die Achsträgerschilde (24) bzw. Längsträger (8) bei Figur 16 bis 18 haben entsprechend angepasste eigene Schrauböffnungen (22). Die gleiche Anordnung kann auch an der anderen Verbindungsstelle (16) vorhanden sein. Im Bereich der Durchgangsöffnungen (22) und Durchgangsverbindungen (23) liegen die Stege (9) der Deichsel- und Längsholme (6,8) und der Achsträgerschilde (24) vorzugsweise plan im Kontakt oder mit geringem Abstand aneinander an.

In der gezeigten und bevorzugten Ausführungsform greifen an jeder Verbindungsstelle (15,16) jeweils zwei Profilierungen (17,18,19) formschlüssig ineinander. In Abwandlung können auch jeweils mehrere solcher Profilierungen (17,18,19) an der gleichen Stelle angeordnet sein und formschlüssig ineinander greifen. Hier ist z.B. eine Doppel- oder Dreifachanordnung möglich. In weiterer Variante können einzelne längliche Profilierungen auch in anderer Weise ausgerichtet sein und sich z.B. schräg oder längs der Längsachse (3) des Fahrgestells (1) erstrecken.

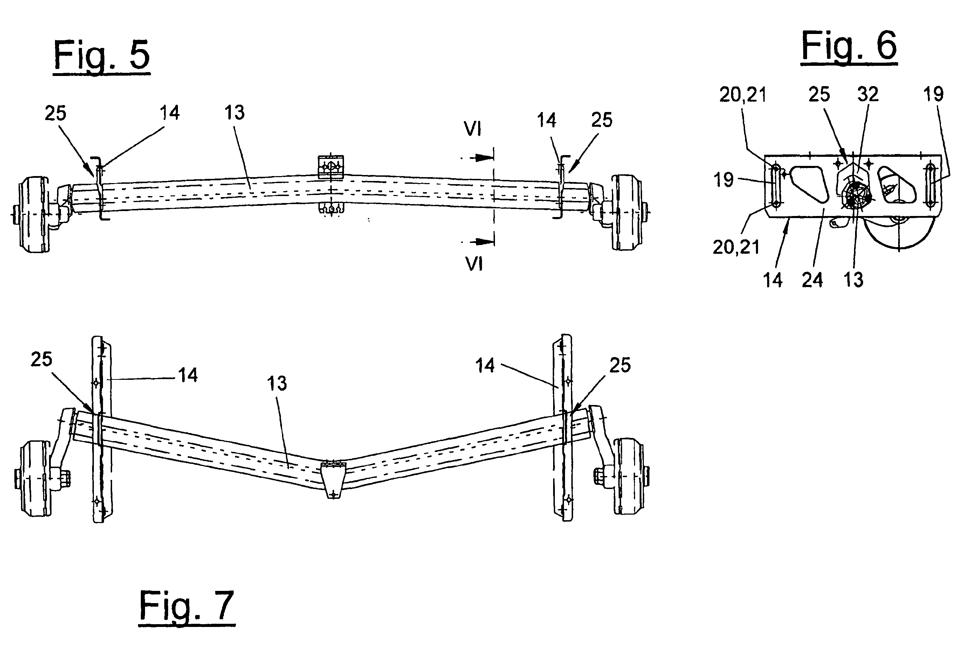

Figur 5 bis 14 und 16 verdeutlichen weitere Details des Fahrgestells (1). Die Achse (13) ist in der gezeigten Ausführungsform als Schräglenkerachse ausgebildet. Sie kann alternativ auch eine Längslenkerachse sein oder eine andere beliebige Ausbildung haben. In der bevorzugten Ausführungsform handelt es sich um eine Gummifederachse. Zur Federung können aber auch alle bekannten Achssysteme, z.B. Drehstabfederachsen, aber auch Federungskomponenten, z.B. Federbeine, Stoßdämpfer, Luftfedererungen und dergleichen andere Teile angebaut sein. Hierfür sind an den Achsträgerschilden (24) und an den Radlenkern entsprechende Befestigungsmöglichkeiten vorhanden. In der gezeigten Ausführungsform von Figur 1 bis 15 ist die Achse (13) über eine Achsaufnahme (25) fest mit den Achsträgerschilden (24) verbunden. Hierfür haben die Achsträgerschilde (24) eine entsprechende passgenaue Durchgangsöffnung (31), welche sich vorzugsweise in der Mitte des Achsträgerschildes (24) befindet. Oberhalb der Durchgangsöffnung (31) kann der Steg (9) einen schräg und dachförmig ausgeprägten Bereich (32) haben. Die Verbindung von Achskörper und Steg (9) kann in beliebig geeigneter Weise durch Laschen, Schweißen oder dergleichen andere Techniken erfolgen. Die Achsträgerschilde (24) können außerdem zur Gewichtsersparnis Ausnehmungen im Steg (9) aufweisen. Die Ausnehmungen habe außerdem Vorteile hinsichtlich der Aufnahme von Verwerfungen im Blech, welche durch die Sicken-Verprägungen entstehen. Zur Steigerung der Festigkeit kann der Rand der Ausnehmungen verprägt werden. In der gezeigten Ausführungsform ist der Achsträgerschild (24) in der Seitenansicht im Wesentlichen rechteckig ausgebildet.

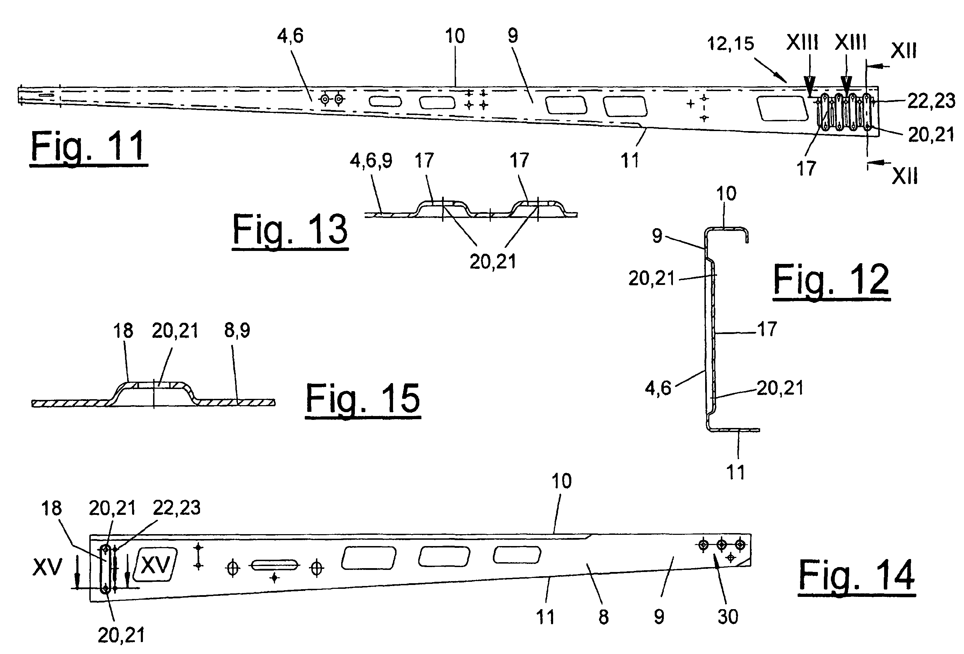

Die in Figur 11 bis 13 dargestellten Deichselholme (6) haben in der Seitenansicht eine Keilform, die sich zum Endbereich (7) stetig vergrößert, wobei die vier parallelen Profilierungen (17) für die Längenverstellung (12) im Bereich der größten Steghöhe angeordnet sind. Die in Figur 14 und 15 dargestellten Längsholme (8) haben ebenfalls eine Keilform, die sich nach hinten zur Heckverlängerung (30) hin verjüngt. Die Heckverlängerung (30) kann über ein Schraubregister längenverstellbar sein, wobei hier ziegelstumpfförmige Profilierungen mit kreisrunder oder ovaler Kontur entsprechend des DE-G 299 22 270 oder der EP 0 479 134 zum Einsatz kommen können. Alternativ können hier aber auch längliche und schienenförmige Profilierungen (17,18,19) wie an den Verbindungsstellen (15,16) eingesetzt werden.

Abwandlungen der gezeigten Ausführungsformen sind in verschiedener Weise möglich. Zum einen kann die Achse (13) wie in dem DE-G 299 22 270 in die Längsholme (8) fest integriert sein. Grundsätzlich können ferner beliebige andere beliebige Teile des Fahrgestells (1) mit der beschriebenen Verbindungstechnik ausgestattet werden. Variabel sind auch die Querschnittsgestaltung und sonstige Ausbildungen der Deichsel (4) und ihrer Deichselholme (6), der Längsholme (8), der Achsträgerschilde (24) und der Heckverlängerung (30). Letztere kann alternativ auch entfallen. Das Fahrgestell (1) kann ferner ohne Längenverstellung (12) auskommen.

In weiterer Abwandlung können mehr als zwei Durchgangsöffnungen (20) und Durchgangsverbindungen (21) je Profilierung (17,18,19) vorhanden sein. Zudem müssen die Profilierung (17,18,19) nicht zwingend gerade Seitenränder oder Seitenwände haben, sondern können auch eine gewölbte oder gekrümmte Form haben und z.B. in einer Schlangenlinie verlaufen, was eine zusätzliche Aufnahme längs gerichteter Kräfte erlaubt. Die Seitenränder oder Seitenwände müssen sich auch nicht parallel zueinander erstrecken, sondern können alternativ z.B. seitlich ausbauchen. Zudem können die Profilierung (17,18,19) aus der bevorzugten und gezeigten im wesentlichen mittigen und symmetrischen Höhenlage an den Stegen (9) verschoben und versetzt angeordnet sein.

### BEZUGSZEICHENLISTE

- 1: Fahrgestell für Fahrzeuganhänger
- 2: Fahrzeugaufbau
- 3: Längsachse
- 4: Fahrgestellteil, Deichsel
- 5: Anhängerkupplung
- 6: Deichselholm, Holm
- 7: Endbereich
- 8: Fahrgestellteil, Längsholm, Holm
- 9: Steg
- 10: Obergurt
- 11: Untergurt
- 12: Längenverstellung
- 13: Achse
- 14: Fahrgestellteil, Achsträger
- 15: Verbindungsstelle vorn
- 16: Verbindungsstelle hinten
- 17: längliche Profilierung an Deichsel
- 18: längliche Profilierung an Längsholm
- 19: längliche Profilierung an Achsträger
- 20: Durchgangsöffnung, Schrauböffnung in Profilierung
- 21: Durchgangsverbindung, Schraubverbindung Profilierung
- 22: Durchgangsöffnung, Schrauböffnung für Sicherung
- 23: Durchgangsverbindung, Schraubverbindung Sicherung
- 24: Achsträgerschild
- 25: Achsaufnahme
- 26: Beschlag
- 27: Stütze
- 28: Bremszug
- 29: Traverse
- 30: Heckverlängerung
- 31: Durchgangsöffnung
- 32: ausgeprägter Stegbereich
- 33: Topfschiene
- 34: längliche Sicke, Prägung
- 34': längliche Sicke, Prägung
- 34'': längliche Sicke, Prägung
- 35: Sickenachse
- 36: Rundung, Sickenabschluss
- 37: Sickenöffnung
- 38: schräger Übergang
- 39: napfförmige Sicke

## Patentansprüche

1. Fahrgestell für Fahrzeuganhänger, bestehend aus mehreren untereinander mit Überlappung verbundenen Fahrgestellteilen (4,8,14), wobei an deren Verbindungsstellen (15,16) formschlüssig ineinander greifende Profilierungen (17,18,19) mit jeweils mindestens zwei Durchgangsverbindungen (21), vorzugsweise Schraubverbindungen, und mindestens zwei distanzierten Durchgangsöffnungen (20) angeordnet sind wobei die Profilierung (17,18,19) länglich ausgebildet ist und eine längliche Sicke (34,34',34'') aufweist, **dadurch gekennzeichnet, dass** die sicke mit ihrer Sickenachse (35) quer zur Längsachse (3) des Fahrgestells (1) ausgerichtet ist.

2. Fahrgestell nach Anspruch 1, **dadurch gekennzeichnet, dass** die längliche Sicke (34,34',34'') gerade parallele Längskanten und ein oder zwei Enden mit stufenförmigen Sickenabschlüssen (36) aufweist.

3. Fahrgestell nach Anspruch 1 oder 2, **dadurch gekennzeichnet, dass** die längliche Sicke (34,34') zwei endseitige stufenförmige Sickenabschlüssen (36) mit jeweils einer Durchgangsöffnung (20) aufweist.

4. Fahrgestell nach Anspruch 1 oder 2, **dadurch gekennzeichnet, dass** die Profilierungen (17,18,19) zusätzlich zur länglichen Sicke (34,34',34'') eine napfförmige Sicke (39) aufweisen

5. Fahrgestell nach Anspruch 4, **dadurch gekennzeichnet, dass** die längliche Sicke (34'') am einen Ende einen stufenförmigen Sickenabschluss (36) und am anderen Ende eine Sickenöffnung (37) mit einem schrägen Übergang (38) aufweist.

6. Fahrgestell nach Anspruch 5, **dadurch gekennzeichnet, dass** die napfförmige Sicke (39) benachbart zur Sickenöffnung (37) angeordnet ist.

7. Fahrgestell nach Anspruch 4, 5 oder 6, **dadurch gekennzeichnet, dass** eine Durchgangsöffnung (20) am stufenförmigen Sickenabschluss (36) und eine Durchgangsöffnung (20) in der napfförmige Sicke (39) angeordnet ist.

8. Fahrgestell nach einem der vorhergehenden Ansprüche, **dadurch gekennzeichnet, dass** die Fahrgestellteile (4,8,14) holmartig mit einem aufrechten Steg (9) ausgebildet sind, wobei die Profilierungen (17,18,19) am Steg (9) angeordnet sind und sich zumindest über den Großteil der Steghöhe erstrecken.

9. Fahrgestell nach einem der vorhergehenden Ansprüche, **dadurch gekennzeichnet, dass** an dein oder mehreren Profilierungen (17,18,19) eine Topfschiene (33) zur Verstärkung angeordnet ist.

10. Fahrgestell nach einem der vorhergehenden Ansprüche, **dadurch gekennzeichnet, dass** neben den Profilierungen (17,18,19) ein oder mehrere zusätzliche Durchgangsverbindungen (23) mit Durchgangsöffnungen (22) angeordnet sind.

11. Fahrgestell nach einem der vorhergehenden Ansprüche, **dadurch gekennzeichnet, dass** das Fahrgestell (1) eine starren V-förmige Deichsel (4) und zwei Längsholme (8) aufweist, die an einer ersten Verbindungsstelle (15) mittels länglicher Profilierungen (17,18) mit mindestens zwei Durchgangsverbindungen (21) miteinander verbunden sind.

12. Fahrgestell nach einem der vorhergehenden Ansprüche, **dadurch gekennzeichnet, dass** an mindestens einer Verbindungsstelle (15,16) eine Längenverstellung (12) des Fahrgestells (1) mit mehreren parallel nebeneinander angeordneten Profilierungen (17,18,19) mit Durchgangsverbindungen (21) angeordnet ist.

13. Fahrgestell nach einem der vorhergehenden Ansprüche, **dadurch gekennzeichnet, dass** die Mehrfachanordnung der Profilierungen (17,18) für die Längenverstellung (12) an den Deichselholmen (6) und/oder den Längsholmen (8) angeordnet ist.

14. Fahrgestell nach einem der vorhergehenden Ansprüche, **dadurch gekennzeichnet, dass** die Längsholme (8) eine verstellbare Heckverlängerung (30) aufweisen.

## Claims

1. Chassis for vehicle trailers, consisting of a plurality of chassis parts (4, 8, 14) connected to one another with an overlap, there being arranged at the connection points (15, 16) of these profilings (17, 18, 19) engaging positively one into the other, in each case with at least two passage connections (21), preferably screw connections, and with at least two spaced-apart passage orifices (20), the profiling (17, 18, 19) being of elongate design and having an elongate bead (34, 34', 34''), **characterized in that** the bead is oriented with its bead axis (35) transversely with respect to the longitudinal axis (3) of the chassis (1).

2. Chassis according to Claim 1, **characterized in that** the elongate bead (34, 34', 34'') has straight parallel longitudinal edges and one or two ends with step-shaped bead terminations (36).

3. Chassis according to Claim 1 or 2, **characterized in that** the elongate bead (34, 34') has two end-face step-shaped bead terminations (36), each with a passage orifice (20).

4. Chassis according to Claim 1 or 2, **characterized in that** the profilings (17, 18, 19) have a cup-shaped bead (39) in addition to the elongate bead (34, 34', 34'').

5. Chassis according to Claim 4, **characterized in that** the elongate bead (34'') has at one end a step-shaped bead termination (36) and at the other end a bead orifice (37) with an oblique transition (30).

6. Chassis according to Claim 5, **characterized in that** the cup-shaped bead (39) is arranged adjacently to the bead orifice (37).

7. Chassis according to Claim 4, 5 or 6, **characterized in that** one passage orifice (20) is arranged at the step-shaped bead termination (36) and one passage orifice (20) is arranged in the cup-shaped bead (39).

8. Chassis according to one of the preceding claims, **characterized in that** the chassis parts (4, 8, 14) are of spar-like design with a vertical web (9), the profilings (17, 18, 19) being arranged on the web (9) and extending at least over a large part of the web height.

9. Chassis according to one of the preceding claims, **characterized in that** a dished rail (33) is arranged for reinforcement on one or more profilings (17, 18, 19).

10. Chassis according to one of the preceding claims, **characterized in that** one or more additional passage connections (23) with passage orifices (22) are arranged next to the profilings (17, 18, 19).

11. Chassis according to one of the preceding claims, **characterized in that** the chassis (1) has a rigid V-shaped drawbar (4) and two longitudinal spars (8) which are connected to one another at a first connection point (15) by means of elongate profilings (17, 18) having at least two passage connections (21).

12. Chassis according to one of the preceding claims, **characterized in that** a length adjustment (12) of the chassis (1), with a plurality of profilings (17, 18, 19) arranged parallel and next to one another having passage connections (21), is arranged at at least one connection point (15, 16).

13. Chassis according to one of the preceding claims, **characterized in that** the multiple arrangement of the profilings (17, 18) for the length adjustment (12) is arranged on the drawbar spars (6) and/or the longitudinal spars (8).

14. Chassis according to one of the preceding claims, **characterized in that** the longitudinal spars (8) have an adjustable rear extension (30).

## Revendications

1. Châssis de remorque de véhicule, constitué de plusieurs parties (4, 8, 14) de châssis reliées entre elles à chevauchement, étant prévu à leurs points (15, 16) de liaison des profilages (17, 18, 19) s'interpénétrant à complémentarité de forme et ayant respectivement au moins deux fixations (21) traversantes, de préférence des fixations boulonnées, et au moins deux ouvertures (20) traversantes à distance, le profilage (17, 18, 19) étant oblong et ayant une moulure (34, 34', 34") oblongue, **caractérisé en ce que** l'axe (35) de la moulure est dirigé transversalement à l'axe (3) longitudinal du châssis (1).

2. Châssis suivant la revendication 1, **caractérisé en ce que** la moulure (34, 34', 34") oblongue a des bords longitudinaux droits parallèles et une ou deux extrémités ayant des fins (36) de moulure de forme étagée.

3. Châssis suivant la revendication 1 ou 2, **caractérisé en ce que** la moulure (34, 34') oblongue a deux fins (36) de moulure, étagées du côté de l'extrémité, ayant respectivement une ouverture (20) traversante.

4. Châssis suivant la revendication 1 ou 2, **caractérisé en ce que** les profilages (17, 18, 19) ont, en plus de la moulure (34, 34', 34") oblongue, une moulure (39) en forme de godet.

5. Châssis suivant la revendication 4, **caractérisé en ce que** la moulure (34") oblongue a une fin (36) de moulure étagée à une extrémité et une ouverture (37) de moulure ayant une transition (38) en biais à l'autre extrémité.

6. Châssis suivant la revendication 5, **caractérisé en ce que** la moulure (39) en forme de godet est disposée au voisinage de l'ouverture (37) de la moulure.

7. Châssis suivant la revendication 4, 5 ou 6, **caractérisé en ce qu'**une ouverture (20) traversante est disposée à la fin (36) de moulure étagée et une ouverture (20) traversante est disposée dans la moulure (39) en forme de godet.

8. Châssis suivant l'une des revendications précédentes, **caractérisé en ce que** les parties (4, 8, 14) du châssis sont constituées sous la forme de traverses ayant une âme (9) debout, les profilages (17, 18, 19) étant disposés sur l'âme (9) et s'étendant au moins sur la plus grande partie de la hauteur de l'âme.

9. Châssis suivant l'une des revendications précédentes, **caractérisé en ce qu'**il est prévu un rail (33) chapeau de renfort sur un profilage ou sur plusieurs profilages (17, 18, 19).

10. Châssis suivant l'une des revendications précédentes, **caractérisé en ce qu'**il est monté, à côté des profilages (17, 18, 19), une fixation traversante supplémentaire ou plusieurs fixations (23) traversantes supplémentaires ayant des ouvertures (22) traversantes.

11. Châssis suivant l'une des revendications précédentes, **caractérisé en ce que** le châssis (1) a une fourche (4) d'attelage de remorque rigide en forme de V et deux longerons (8) qui sont assemblés l'un à l'autre en un premier plan (15) d'assemblage au moyen de profilages (17, 18) oblongs ayant au moins deux fixations (21) traversantes.

12. Châssis suivant l'une des revendications précédentes, **caractérisé en ce qu'**en au moins l'un des points (15, 16) d'assemblage est prévu un réglage (12) en longueur de la partie (1) du châssis ayant plusieurs profilages (17, 18, 19) disposés parallèlement côte à côte et ayant des fixations (21) traversantes.

13. Châssis suivant l'une des revendications précédentes, **caractérisé en ce que** la disposition multiple des profilages (17, 18) pour le réglage (12) en longueur est disposée sur les barres (6) de la fourche d'attelage et/ou sur les longerons (8).

14. Châssis suivant l'une des revendications précédentes, **caractérisé en ce que** les longerons (8) ont une rallonge (30) arrière réglable.
